Europäisches Patentamt

European Patent Office

Office européen des brevets

(19)

(11) Numéro de publication : **0 126 290 B2**

(12) ## NOUVEAU FASCICULE DE BREVET EUROPEEN

(45) Date de publication du nouveau fascicule du brevet : **30.03.94 Bulletin 94/13**

(51) Int. Cl.$^5$ : **A23C 21/00, A23J 3/00**

(21) Numéro de dépôt : **84104253.4**

(22) Date de dépôt : **14.04.84**

(54) **Procédé de préparation d'un produit lactosérique.**

(30) Priorité : **13.05.83 CH 2615/83**

(43) Date de publication de la demande :
**28.11.84 Bulletin 84/48**

(45) Mention de la délivrance du brevet :
**07.01.87 Bulletin 87/02**

(45) Mention de la décision concernant
l'opposition :
**30.03.94 Bulletin 94/13**

(84) Etats contractants désignés :
**AT BE CH DE FR IT LI LU NL SE**

(56) Documents cités :
**EP-A- 0 076 685**
**FR-A- 1 523 106**
**FR-A- 2 149 039**
**GB-A- 2 063 273**
**NL-A- 7 603 369**
**US-A- 1 954 769**
**US-A- 3 791 283**

(56) Documents cités :
**JOURNAL OF FOOD SCIENCE, vol. 48, no. 1,
janvier-février 1983, pages 42-46,70, Chicago,
Illinois, USA; S. VARUNSATIAN et al.: "Effects
of Ca++, Mg++ and Na+ on heat aggregation
of whey protein concentrates"**
**CHEMICAL ABSTRACTS, vol. 78, no. 19, 14 mai
1973, page 350, no. 122872s, Columbus, Ohio,
USA; K. MIYAZAWA: "Heat stability of mixtures of milk and whey proteins. I. Heat stability
of the mixtures of milk and various kinds of
whey"**
**Netherlands Milk Dairy Journal 35, 47-64
(1981)**
**Jennes et Patton, Principles of Dairy Chemistry, 169-176 (1959)**
**Journal of Dairy Science 47, 947-953 (1964)**
**Netherlands Milk and Dairy Journal 17,
177-184 (1963)**
**American Dairy Review 58, 34-38 (1976)**

(73) Titulaire : **SOCIETE DES PRODUITS NESTLE
S.A.**
**Case postale 353**
**CH-1800 Vevey (CH)**

(72) Inventeur : **De Rham, Olivier**
**Ch. de la Paisible 21**
**CH-1814 La Tour-De-Peilz (CH)**

EP 0 126 290 B2

## Description

La présente invention a pour objet un procédé de préparation d'un produit lactosérique contenant les protéines du lactosérum sous forme stable à la chaleur dans une certaine gamme de pH.

On connaît un procédé de préparation d'un produit protéique lactosérique stable à la chaleur à pH $\leqq$ 4,0 qui présente des rapports pondéraux calcium : protéines de 0,2-5:100, cendres : protéines de 2-20:100 et calcium : cendres de 2-35:100. Ce produit connu doit présenter une teneur en protéines supérieure à 50% sur matière sèche et est obtenu à partir de lactosérum par ajustement préalable du rapport calcium : protéine à une valeur de 3-9:100 suivi d'une séparation moléculaire à un pH de 6,5 ou de 3,0. Ce produit connu est destiné à enrichir des boissons acides à goût de fruits carbonatées ou non. Ces boissons acides ainsi enrichies peuvent être stérilisées à la chaleur sans qu'aucune protéine ne précipite.

Il existe cependant d'autres situations où une stabilité des protéines du lactosérum à la chaleur est également désirée mais où les procédés connus du type évoqué ci-dessus ne sont pas suffisants pour atteindre à coup sûr le résultat désiré. C'est notamment le cas pour certaines boissons à pH neutre dans la composition desquelles les protéines du petit-lait entrent pour une part importante et c'est tout particulièrement le cas de certains laits adaptés aux besoins du nourrisson.

GB-A-2063273 décrit un procédé de stabilisation du petit-lait par chauffage dans un domaine de pH alcalins, de manière que les protéines, qui sont dénaturées, ne précipitent plus.

EP-A-76685 décrit un procédé d'amélioration des propriétés de gélification des protéines du petit-lait, dans lequel on alcalinise une solution concentrée de ces protéines à pH 8,5-11,5, on maintient la solution à 35 -50°C dans ce domaine de pH puis on la neutralise notamment par addition d'acide citrique.

Netherlands Milk Dairy Journal 35, 47-64( 1981) étudie la stabilité à la chaleur de la bêta-lactoglobuline en solution aqueuse, en fonction de la teneur en Ca et du pH de la solution. Cette protéine serait à l'origine de la sensibilité au pH de la stabilité à la chaleur des protéines lactiques.

Journal of Food Science 48, 42-46 (1983) étudie la stabilité à la chaleur de concentrats de protéines de lactosérum en fonction du pH et de la concentration en ions Ca, Mg ou Na.

Jennes et Patton, Principles of Dairy Chemistry, 169-176 (1959) discutent de la répartition des sels entre la phase dissoute et la phase colloïdale du lait cru.

Journal of Dairy Science 47, 947-953 (1964) étudie certains facteurs affectant l'aggrégation à la chaleur des protéines de lactosérum, notamment la teneur en calcium et en phosphore du lactosérum.

Netherlands Milk and Dairy Journal 17, 177-184 (1963) étudie la composition du lactosérum résultant de la fabrication de divers fromages du Friesland et sa variation en fonction des saisons.

American Dairy Review 58, 34-38 (1976) se rapporte à des utilisations de lactosérum déminéralisé.

La présente invention a donc pour but de proposer un procédé de préparation d'un produit lactosérique contenant les protéines du lactosérum sous forme stable à la chaleur au pH considéré.

A cet effet, une première forme d'exécution du procédé selon la présente invention est caractérisée par le fait que l'on déminéralise un lactosérum de fromagerie, on ajuste la teneur en Ca du lactosérum déminéralisé à au moins 0,34% sur matière sèche, et l'on ajuste les concentrations en Ca, Mg, citrate et/ou phosphate, ainsi que le pH du lactosérum déminéralisé de manière à satisfaire les relations

$$[\text{Ca} + \text{Mg} - \text{citrate}] < 0 \text{ mM pour } 5,5 \leqq \text{pH} < 6,2$$
$$[\text{Ca} + \text{Mg} - \text{citrate}] < 4 \text{ mM pour } 6,2 \leqq \text{pH} < 7,2$$
$$[\text{Ca} + \text{Mg} - \text{citrate} - \text{phosphate}] < 4 \text{ mM pour } 7,2 \leqq \text{pH} \leqq 9,0$$

De même, une deuxième forme d'exécution du procédé selon la présente invention est caractérisée par le fait que l'on prépare par ultrafiltration un concentrat de lactosérum doux présentant une teneur en matière sèche de 8,4-13% et une teneur en Ca de au moins 0,86% sur matière sèche, et l'on ajuste les concentrations en Ca, Mg, citrate et/ou phosphate du concentrat ainsi que son pH de manière à satisfaire les relations

$$[\text{Ca} + \text{Mg} - \text{citrate}] < 0 \text{ mM pour } 5,5 \leqq \text{pH} < 6,2$$
$$[\text{Ca} + \text{Mg} - \text{citrate}] < 4 \text{ mM pour } 6,2 \leqq \text{pH} < 7,2$$
$$[\text{Ca} + \text{Mg} - \text{citrate} - \text{phosphate}] < 4 \text{ mM pour } 7,2 \leqq \text{pH} \leqq 9,0$$

On a constaté en effet que l'on ne pouvait pas se fier au seul critère du rapport calcium : protéine tel qu'utilisé dans l'état de la technique mentionné ci-dessus pour éviter une précipitation des protéines du lactosérum chauffées à pH neutre.

Dans le présent exposé, les désignations Ca, Mg, citrate et phosphate recouvrent aussi bien la forme libre que liée des ions en questions. Ainsi p. ex. la désignation Ca recouvre aussi bien la forme ionisée $Ca^{++}$ que la forme chelatée du calcium et c'est la concentration en calcium total qui est prise en considération dans lesdites relations.

En outre, les protéines sont considérées et déterminées dans le présent exposé comme le produit de l'azote total par le facteur 6,38.

Par l'expression "pH considéré" il faut comprendre dans le présent exposé un pH avoisinant pH 7, qui ne sort pas du domaine allant de pH 5,5 à 9,0 et qui est de préférence compris même dans un domaine plus étroit tel que pH 6,5 à 7,5 p. ex. Ce dernier domaine couvre des valeurs de pH typiques des laits adaptés aux besoins du nourrisson.

De même, par l'expression "protéines stables à la chaleur" il faut comprendre dans le présent exposé des protéines dont plus de 80 % restent solubles après un traitement thermique équivalent à une stérilisation. La notion de précipité ou précipitation est à comprendre dans le même sens que coagulation ou insolubilisation. Au contraire, la notion de dénaturation est réservée dans le présent exposé à une modification de la structure des protéines du lactosérum par un traitement quelconque à la chaleur, aux acides ou aux bases. Lors d'un traitement sévère, notamment lors d'une stérilisation, cette dénaturation peut entraîner une réaction d'aggrégation et la précipitation.

On a constaté donc que la précipitation des protéines du lactosérum à pH neutre sous l'effet d'un traitement thermique équivalant à une stérilisation peut se produire même si le rapport calcium : protéine présente une valeur apparemment faible. Une étude approfondie des mécanismes impliqués dans cette précipitation a révélé divers faits significatifs qui ont permis de mettre au point le présent procédé à la fois simple, sûr et précis.

On a déterminé la stabilité à la chaleur des protéines des produits obtenus par le présent procédé à l'aide d'un test adéquat qui se distingue résolument de deux méthodes connues couramment utilisées en la matière. La première de ces méthodes connues consiste à déterminer la dénaturation des protéines du lactosérum par acidification à pH 4,6, centrifugation et dosage de l'azote du surnageant. Or on a constaté qu'un même traitement thermique provoquant des dénaturations similaires peut avoir en fait des conséquences très diverses sur la solubilité, selon le produit, le pH auquel le traitement thermique a lieu et la concentration en calcium libre lors de ce traitement.

La seconde de ces méthodes connues est basée sur la mesure du volume du précipité. Or on a constaté que l'hydratation du précipité est variable selon les conditions dans lesquelles la précipitation s'est produite. C'est ainsi que l'on a choisi de déterminer la stabilité à la chaleur des protéines du lactosérum par séparation des protéines précipitées au pH du traitement thermique, dosage de l'azote au surnageant et calcul par rapport à l'azote initial avant traitement thermique.

On a donc défini sur ce principe un test adéquat simple à réaliser qui consiste à prélever 10 ml de solution dans un bécher, élever la température rapidement (environ 20 s) à 95°C par injection de vapeur, maintenir cette température durant 5 min par barbotage de vapeur, plonger le bécher dans un bain d'eau courante, transvaser son contenu dans un ballon jaugé de 50 ml, compléter au trait de jauge avec de l'eau distillée, centrifuger à 2500 g pendant 10 min, doser la teneur en azote du surnageant, diviser par la teneur en azote de la solution initiale et multiplier par cent. En d'autres termes, on détermine et exprime ainsi en pourcents le rapport "azote en solution après stérilisation au pH considéré": "azote dans la solution avant la stérilisation".

On a vérifié que ce test produit un effet pratiquement définitif et qu'une prolongation de la durée du barbotage ou une élévation de la température n'entraîne pas une augmentation pratiquement déterminante de l'effet. On a établi qu'une solubilité des protéines maintenue à un niveau supérieur à 80 % dans les conditions de ce test était satisfaisante du point de vue pratique.

On a donc mené sur base de ce test ladite étude approfondie des mécanismes impliqués dans la précipitation, en variant le produit, le pH et l'environnement ionique. Le présent procédé issu de cette étude résout de manière remarquable les problèmes réels rencontrés dans la pratique. Il n'a pas seulement l'avantage d'être simple et pratique à maîtriser, il garantit également l'obtention de la stabilité à la chaleur désirée, à savoir le maintien de la solubilité de plus de 80% des protéines du lactosérum soumises à un traitement thermique équivalent à une stérilisation. Sa fiabilité est en outre surprenante eu égard à la sévérité du traitement thermique en question.

Pour mettre en oeuvre le présent procédé, on peut partir d'un lactosérum de fromagerie, à savoir un lactosérum doux ou acide pour la première forme de réalisation et un lactosérum doux pour la seconde forme de réalisation.

Un lactosérum dit doux résulte d'une coagulation de la caséine de type présure. Un lactosérum dit acide résulte d'une coagulation de la caséine de type acide.

Pour ajuster lesdites concentrations et satisfaire lesdites relations, on peut utiliser divers moyens. On peut en particulier ajouter du citrate et/ou du phosphate sous forme de composé chimique approprié que l'on peut choisir parmi les sels adéquats de sodium ou potassium p. ex., ce qui a pour effet de masquer le calcium et le magnésium; ou augmenter le pH, ce qui a pour effet de favoriser la formation de complexes calciques ou magnésiens avec les anions polyvalents présents.

On peut également, en ce qui concerne la seconde forme de réalisation, échanger les ions indésirables contre des ions désirables, sur des échangeurs d'ions ou par électrodialyse; ou dialyser le produit à pH acide, c'est-à-dire à un pH situé en-dessous de la zone définie ci-dessus pour le pH considéré, et de préférence à un pH de environ 4,5.

On peut ajuster le pH de toute manière appropriée au domaine alimentaire compatible avec le présent procédé, la plus simple étant d'abaisser ou d'élever le pH avec respectivement de l'acide chlorhydrique, citrique ou phosphorique ou de l'hydroxyde de sodium ou potassium ou du carbonate de sodium par exemple.

En ce qui concerne lesdites relations entre les concentrations en Ca, Mg, citrate et/ou phosphate et le pH, il faut comprendre d'une part que la limite de la concentration molaire à ne pas dépasser pour la somme du Ca et du Mg sous déduction du citrate et/ou du phosphate varie en fonction du pH et d'autre part que l'effet du phosphate n'est pratiquement pas sensible au-dessous de pH 7,2. Ainsi, pour un pH de 5,5 à moins de 6,2, la concentration en Ca + Mg - citrate doit-elle être inférieure à 0 mM alors quepour un pH de 6,2 à moins de 7,2 elle peut monter à environ 4 mM. A partir de pH 7,2, c'est la concentration en Ca + Mg - citrate - phosphate qui doit être inférieure à 4 mM.

Au vu de ce qui précède, on peut se demander si d'autres chélateurs du calcium ou du magnésium ne devraient pas être pris en considération, tels que le phytate, la sérine-phosphate, le pyrophosphate et les polyphosphates ou l'EDTA p. ex. On a donc vérifié la réalité de leur efficacité à des pH adéquats. Mais on préfère dans le présent procédé n'ajuster que la concentration d'éléments qui se trouvent naturellement en quantités importantes dans le lactosérum.

Le produit lactosérique préparé par le présent procédé contient donc les protéines du lactosérum sous forme stable à la chaleur, autrement dit présentant une stabilité à la chaleur supérieure à 80 %, de sorte que son emploi dans la confection de boisssons à pH neutre, notamment de laits adaptés aux besoins du nourrisson, soit compatible avec des traitements thermiques équivalant à une stérilisation utilisés au cours de la confection ou de l'usage de ces boissons.

Les exemples ci-après sont présentés à titre illustration du procédé selon la présente invention. Les pourcentages y sont donnés en poids sauf indication contraire.

Dans ces exemples, les dosages d'ions ont été réalisés par les méthodes suivantes:
- phosphate par formation de phosphomolybdate après minéralisation humide ou sèche
- citrate par la pyridine et l'acide acétique
- calcium et magnésium par absorption atomique après minéralisation sèche.

La somme des concentrations molaires du Ca et du Mg sous déduction de la concentration molaire du citrate ainsi que le cas échéant de la concentration molaire du phosphate est exprimée sous la même forme que celle utilisée dans lesdites relations ci-dessus.

Toutes les opérations de stérilisation ont été faites par chauffage à 95°C durant 5 min de manière conforme au test décrit ci-dessus.

La stabilité à la chaleur des protéines du lactosérum est donnée comme le rapport "azote en solution après stérilisation au pH considéré": "azote dans la solution avant stérilisation" exprimé en pourcents et déterminé conformément audit test.

Enfin, la différence au 100 % de matière sèche dans les compositions indiquées équivaut à la teneur en lactose.

## Exemples comparatifs

a) On dialyse partiellement un lactosérum doux contre de l'eau désionisée. Le produit obtenu présente un pH de 8,2 et une teneur en matière sèche de 5,3 % après évaporation dont:

| | |
|---|---|
| protéines | 65,7 % |
| Ca | 1,1 % |
| Mg | 0,17 % |
| cendres | 4,6 % |
| citrate | 0,54 % |
| phosphate | 0,92 % |

ce qui signifie des rapports pondéraux calcium : protéines de 1,7:100, cendres : protéines de 7:100 et calcium : cendres de 24:100. Mais, [Ca + Mg - citrate] = 17,0 mM et [Ca + Mg - citrate - phosphate] = 11,9 mM.

Quoique le produit présente une composition conforme à la définition donnée par l'état de la technique cité ci-dessus, ses protéines présentent une stabilité à la chaleur inférieure à 40 % pour les pH compris entre 4,5 et 8,0.

b) On ultrafiltre un lactosérum doux dans une installation industrielle. Le produit obtenu présente un pH de 6,8 et une teneur en matière sèche de 13,2 % dont:

| | |
|---|---|
| protéines | 82,6 % |
| Ca | 0,86 % |

Mg          0,07 %
cendres     2,8 %
citrate     0,10 %
phosphate   0,95 %
[Ca + Mg - citrate] = 31,7 mM et [Ca + Mg - citrate - phosphate] = 18,4 mM.

Quoique le produit présente également une conposition conforme à la définition donnée par l'état de la technique cité ci-dessus, ses protéines présentent une stabilité à la chaleur inférieure à 60 % à pH 8,0 et encore moins élevée à pH 7,5.

Exemple 1

Un lactosérum doux déminéralisé par échange d'ions présente un pH de 6,8 et une teneur en matière sèche de 6 % dont:

| | | | |
|---|---|---|---|
| **protéines** | **12,6 %** | **phosphate** | **0,3 %** |
| **Ca** | **0,02 %** | **cendres** | **0,52 %** |
| **Mg** | **0,06 %** | | |
| **citrate** | **0,6 %** | | |

[Ca + Mg - citrate] = - 0,1 mM

Pour ajuster la teneur en calcium du produit à 0,35 % sur matière sèche, on ajoute en quantités molaires égales de l'acide citrique et de l'hydroxyde de calcium. On ajuste le pH à 6,0 par addition de NaOH. On peut ensuite concentrer le produit par évaporation et le sécher par atomisation ou le stériliser. Ses protéines présentent une stabilité à la chaleur de 85 %.

Par contre si, pour comparaison, on utilise du citrate **et** du calcium dans un rapport molaire de 2:3 pour réaliser cet ajustement de la teneur en calcium, les protéines présentent une stabilité à la chaleur inférieure à 50 %. Autrement dit, plus de la moitié sont insolubilisées lors de l'évaporation et du séchage ou de la stérilisation. Il manque environ 2 mM de citrate pour rétablir un environnement ionique assurant une stabilité à la chaleur des protéines supérieure à 80 %.

Exemple 2

On prépare un lactosérum doux déminéralisé à 85 % par échange d'ions ou dialyse qui présente un pH de 6,7 et une teneur en matière sèche de 6 % dont:
protéines   12 %
Ca          0,34 %
Mg          0,03 %
cendres     2 %
citrate     0,4 %
phosphate   0,5 %
[Ca + Mg - citrate] = 4,6 mM et [Ca + Mg - citrate - phosphate] = 1,4 mM.

On ajuste son pH à 7,5 par addition de KOH et on peut le stériliser. La stabilité des protéines à la chaleur est supérieure à 80 %.

Par contre si, pour comparaison, on réalise la stérilisation à un pH de 6,5-7,0, trop de protéines précipitent. La stabilité des protéines à la chaleur est inférieure à 70 %.

Exemple 3

A un lactosérum déminéralisé tel que décrit à l'exemple 2 on ajoute 4 mM de citrate de sodium ou de potassium. On peut le stériliser à un pH de 6,5-7,0. La stabilité des protéines à la chaleur est supérieure à 80 %.

Exemple 4

On concentre à 24 % de matière sèche un lactosérum déminéralisé tel que décrit à l'exemple 2. On ajoute 18 mM de citrate de sodium et l'on peut stériliser le lactosérum concentré. La stabilité des protéines à la chaleur est supérieure à 80 %.

Exemple 5

On prépare par ultrafiltration un concentrat de lactosérum doux présentant un pH de 8,3 et une teneur en matière sèche de 8,4 % dont:

protéines   78 %
Ca          0,88 %
Mg          0,08 %
cendres     3 %
citrate     0,67 %
phosphate   1,0 %

On dilue le concentrat avec de l'eau déminéralisée à raison de 1 partie en volume de concentrat pour 4 parties d'eau. On peut le stériliser. La stabilité des protéines à la chaleur est de 95 %.

Par contre si, pour comparaison, on ne dilue pas le concentrat, on ne peut pas le stériliser. La stabilité des protéines à la chaleur n'est que de 37 %. Et si l'on ne dilue le concentrat qu'à raison de 1 partie en volume de concentrat pour 1 partie d'eau, la stabilité des protéines à la chaleur n'est encore que de 42 %.

Exemples 6-11

On prépare par ultrafiltration un concentrat de lactosérum doux présentant un pH de 6,8 et une teneur en matière sèche de 13 % dont:

protéines   82,6 %
Ca          0,86 %
Mg          0,07 %
cendres     2,8 %
citrate     0,1 %
phosphate   0,95 %

$[Ca + Mg - citrate] = 31,0$ mM et $[Ca + Mg - citrate - phosphate] = 18,0$ mM.

Si, pour comparaison, on le stérilise tel quel après ajustement du pH à n'importe quelle valeur comprise entre 4,5 et 9,0, on constate que la stabilité à la chaleur de ses protéines est toujours inférieure à 40 %.

Pour chacun des exemples 6 à 11 on prépare un produit lactosérique à protéines présentant une stabilité à la chaleur de plus de 80 % à partir de ce même concentrat de lactosérum selon divers modes de réalisation du présent procédé. Les divers modes de réalisation sont décrits ci-après en référence au No. de chaque exemple. Pour chacun des produits obtenus, la composition sur matière sèche, $[Ca + Mg - citrate]$ lorsque pH < 7,2, $[Ca + Mg - citrate - phosphate]$ lorsque pH $\geqq$ 7,2, et la stabilité des protéines à la chaleur sont indiquées plus loin sur un tableau.

6. On ajoute 15 mM de phosphate mono ou disodique et l'on ajuste le pH à une valeur comprise entre 7,2 et 9,0.

7. On ajoute 15 mM de citrate de sodium et l'on ajuste le pH à une valeur comprise entre 7,2 et 9,0.

8. On acidifie à pH 5,0, on dialyse contre l'eau désionisée et l'on ajuste le pH à une valeur comprise entre 7,2 et 9,0.

9. On acidifie à pH 4,5, on dialyse contre l'eau désionisée et l'on ajuste le pH à une valeur comprise entre 6,4 et 6,8.

10. On adoucit sur un échangeur d'ions cationique fort (sulfoéthylcellulose) régénéré avec NaCl et l'on ajuste le pH à une valeur comprise entre 6,0 et 7,0.

11. On déminéralise sur un échangeur d'ions cationique fort régénéré par HCl puis sur un échangeur d'ions anionique fort (diéthylaminoéthylcellulose) régénéré par NaOH et l'on ajuste le pH à une valeur comprise entre 6,0 et 7,0.

| | Concentrat initial | Produit selon exemple No. | | | | | |
|---|---|---|---|---|---|---|---|
| | | 6 | 7 | 8 | 9 | 10 | 11 |
| **Composition %** | | | | | | | |
| protéines | 82,6 | 81,7 | 80,2 | 85,0 | 87,3 | 85,5 | 87,2 |
| Ca | 0,86 | 0,85 | 0,84 | 0,32 | 0,13 | 0,04 | 0,01 |
| Mg | 0,07 | 0,07 | 0,07 | 0,03 | 0,01 | 0,01 | 0,00 |
| cendres | 2,8 | 4,44 | 3,5 | 1,7 | 0,7 | 2,4 | 0,4 |
| citrate | 0,1 | 0,1 | 2,2 | 0,04 | 0,14 | 0,04 | 0,02 |
| phosphate | 0,95 | 2,05 | 0,92 | 0,73 | 0,67 | 0,50 | 0,13 |
| [Ca + Mg - citrate] mM | 31,0 | | | | 3,8 | 1,6 | 0,2 |
| [Ca + Mg - citrate - phosphate] mM | 18,0 | 3,0 | 3,0 | 1,5 | | | |
| stabilité à la chaleur % | 40 | 87 | 82 | 82 | 96 | 98 | 98 |

Dans le cas de l'exemple 7, on a chauffé jusqu'à 140°C durant 10 min par injection de vapeur et la stabilité des protéines est restée supérieure à 95 %.

Nota bene:

Dans le présent exposé, il n'est question que d'une limite supérieure à ne pas dépasser pour [Ca + Mg - citrate] ou [Ca + Mg - citrate - phosphate]. Lesdites relations entre les concentrations en Ca, Mg, citrate et/ou phosphate et le pH sont formulées en conséquence. La question d'une éventuelle limite inférieure recommander ne se pose pratiquement pas. En effet, la limite inférieure sera toujours donnée par des considérations nutritionnelles, notamment en termes de teneur maximum en citrate du produit à consommer dans la confection duquel le produit obtenu par le procédé selon la présente invention est employé. C'est ainsi que [Ca + Mg - citrate] et [Ca + Mg - citrate - phosphate] dans lesdites relations ne doivent pratiquement jamais descendre au-dessous de - 20 mM.

## Revendications

1. Procédé de préparation d'un produit lactosérique contenant les protéines du lactosérum sous forme stable à la chaleur au pH considéré, caractérisé par le fait que l'on déminéralise un lactosérum de fromagerie, on ajuste la teneur en Ca du lactosérum déminéralisé à au moins 0,34% sur matière sèche, et l'on ajuste les concentrations en Ca, Mg, citrate et/ou phosphate, ainsi que le pH du lactosérum déminéralisé de manière à satisfaire les relations

7

$$[Ca + Mg - citrate] < 0 \text{ mM pour } 5,5 \leqq pH < 6,2$$
$$[Ca + Mg - citrate] < 4 \text{ mM pour } 6,2 \leqq pH < 7,2$$
$$[Ca + Mg - citrate - phosphate] < 4 \text{ mM pour } 7,2 \leqq pH \leqq 9,0$$

2. Procédé selon la revendication 1, caractérisé par le fait que l'on déminéralise un lactosérum doux par échange d'ions.

3. Procédé selon la revendication 1, caractérisé par le fait que l'on ajuste lesdites concentrations par addition de Ca, de citrate et/ou de phosphate.

4. Procédé de préparation d'un produit lactosérique contenant les protéines du lactosérum sous forme stable à la chaleur au pH considéré, caractérisé par le fait que l'on prépare par ultrafiltration un concentrat de lactosérum doux présentant une teneur en matière sèche de 8,4-13% et une teneur en Ca de au moins 0,86% sur matière sèche, et l'on ajuste les concentrations en Ca, Mg, citrate et/ou phosphate du concentrat ainsi que son pH de manière à satisfaire les relations
$$[Ca + Mg - citrate] < 0 \text{ mM pour } 5,5 \leqq pH < 6,2$$
$$[Ca + Mg - citrate] < 4 \text{ mM pour } 6,2 \leqq pH < 7,2$$
$$[Ca + Mg - citrate - phosphate] < 4 \text{ mM pour } 7,2 \leqq pH \leqq 9,0$$

5. Procédé selon la revendication 4, caractérisé par le fait que l'on ajuste lesdites concentrations par addition de citrate et/ou phosphate.

6. Procédé selon la revendication 4, caractérisé par le fait que l'on ajuste lesdites concentrations en dialysant le concentrat de lactosérum doux à pH acide et en rectifiant ensuite le pH.

## Claims

1. A process for the production of a whey product containing whey proteins in a form stable to heat at the pH value in question, characterized in that a cheesemaking whey is demineralized, the Ca content of the demineralized whey is adjusted to at least 0.34%, based on dry matter, and the Ca, Mg, citrate and/or phosphate concentrations and the pH value of the demineralized whey are adjusted to satisfy the following relations:
$$[Ca + Mg - citrate] < 0 \text{ mM for } 5.5 \leqq pH < 6.2$$
$$[Ca + Mg - citrate] < 4 \text{ mM for } 6.2 \leqq pH < 7.2$$
$$[Ca + Mg - citrate - phosphate] < 4 \text{ mM for } 7.2 \leqq pH < 9.0.$$

2. A process as claimed in claim 1, characterized in that a sweet whey is demineralized by ion exchange.

3. A process as claimed in claim 1, characterized in that the said concentrations are adjusted by addition of Ca, citrate and/or phosphate.

4. A process for the production of a whey product containing whey proteins in a form stable to heat at the pH value in question, characterized in that a sweet whey concentrate having a dry matter content of 8.4 to 13% and a Ca content of at least 0.86%, based on dry matter, is prepared by ultrafiltration and the Ca, Mg, citrate and/or phosphate concentrations of the concentrate and its pH value are adjusted to satisfy the following relations:
$$[Ca + Mg - citrate] < 0 \text{ mM for } 5.5 \leqq pH < 6.2$$
$$[Ca + Mg - citrate] < 4 \text{ mM for } 6.2 \leqq pH < 7.2$$
$$[Ca + Mg - citrate - phosphate] < 4 \text{ mM for } 7.2 \leqq pH < 9.0.$$

5. A process as claimed in claim 4, characterized in that the said concentrations are adjusted by addition of citrate and/or phosphate.

6. A process as claimed in claim 4, characterized in that the said concentrations are adjusted by dialyzing the sweet whey concentrate to an acidic pH value and then correcting the pH value.

**Patentansprüche**

1. Verfahren zur Herstellung eines Molkeproduktes, das die Molkeproteine in einer bei dem in Betracht gezogenen pH-Wert wärmestabilen Form enthält, dadurch gekennzeichnet, daß man eine Käsereimolke entmineralisiert, den Calciumgehalt der entmineralisierten Molke auf wenigstens 0,34 %, bezogen auf Trockenmaterial, einstellt und die Konzentrationen an Calcium, Magnesium, Citrat und/oder Phosphat sowie den pH-Wert der entmineralisierten Molke derart einstellt, daß den Beziehungen

$$[Ca + Mg - Citrat] < 0 \text{ mM für } 5,5 \leqq pH < 6,2$$
$$[Ca + Mg - Citrat] < 4 \text{ mM für } 6,2 \leqq pH < 7,2 \text{ und}$$
$$[Ca + Mg - Citrat - Phosphat] < 4 \text{ mM für } 7,2 \leqq pH \leqq 9,0$$

genügt wird.

2. Verfahren nach Anspruch 1, dadurch gekennzeichnet, daß man Molke durch Ionenaustausch entmineralisiert.

3. Verfahren nach Anspruch 1, dadurch gekennzeichnet, daß man die angegebenen Konzentrationen durch Zugabe von Ca, von Citrat und/oder Phosphat einstellt.

4. Verfahren zur Herstellung eines Molkeproduktes, das die Molkeproteine in einer bei dem in Betracht gezogenen pH-Wert wärmestabilen Form enthält, dadurch gekennzeichnet, daß man durch Ultrafiltration ein Süßmolkekonzentrat herstellt, das einen Trockenmaterialgehalt von 8,4-13 % und einen Calciumgehalt von wenigstens 0,86 %, bezogen auf Trockenmaterial, aufweist und daß man die Konzentrationen an Ca, Mg, Citrat und/oder Phosphat des Konzentrats sowie dessen pH-Wert derart einstellt, daß den Beziehungen

$$[Ca + Mg - Citrat] < 0 \text{ mM für } 5,5 \leqq pH < 6,2$$
$$[Ca + Mg - Citrat] < 4 \text{ mM für } 6,2 \leqq pH < 7,2 \text{ und}$$
$$[Ca + Mg - Citrat - Phosphat] < 4 \text{ mM für } 7,2 \leqq pH < 9,0$$

genügt wird.

5. Verfahren nach Anspruch 4, dadurch gekennzeichnet, daß man die engegebenen Konzentrationen durch Zugabe von Citrat und/oder Phosphat einstellt.

6. Verfahren nach Anspruch 4, dadurch gekennzeichnet, daß man die angeführten Konzentrationen durch Dialysieren des Süßmolkekonzentrats bei saurem pHWert und anschließendes Korrigieren des pH-Wertes einstellt.